# EUROPÄISCHE PATENTSCHRIFT

(11) **EP 2 265 409 B1**
(45) Veröffentlichungstag und Bekanntmachung des Hinweises auf die Patenterteilung: **25.01.2012**
(21) Anmeldenummer: 09722760.7
(22) Anmeldetag: 09.03.2009
(51) Int. Cl.: B23Q 7/14

(54) **WERKZEUG-MASCHINE MIT BESCHICKUNGS- UND ENTNAHME-VORRICHTUNG**
MACHINE-TOOL WITH FEEDING AND REMOVAL DEVICE
MACHINE-OUTIL AVEC DISPOSITIF DE CHARGEMENT ET DE DÉCHARGEMENT

(30) Priorität: 18.03.2008 DE 102008014781
(43) Veröffentlichungstag der Anmeldung: 29.12.2010
(73) Patentinhaber: MAG IAS GmbH, 73033 Göppingen (DE)
(72) Erfinder: HORN, Wolfgang, 73035 Göppingen (DE); KRISCHKE, Joachim, 74821 Mosbach (DE); SCHMAUDER, Horst, 72555 Metzingen-Glems (DE)
(74) Vertreter: Rau, Schneck & Hübner
(86) Internationale Anmeldenummer: PCT/EP2009/001661
(87) Internationale Veröffentlichungsnummer: WO 2009/115204

(56) Entgegenhaltungen:
- EP-A- 1 375 057
- EP-A- 1 747 843
- US-A1- 2004 047 700

## Beschreibung

Die Erfindung betrifft eine Werkzeug-Maschine nach dem Oberbegriff des Anspruchs 1.

Derartige Kombinationen von jeweils einer Werkzeug-Maschine mit einer Bestückungs- und Entnahme-Vorrichtung sind beispielsweise aus der US 2004/047700 A1 und der EP 1 201 354 B1 bekannt. Die Werkzeug-Maschine weist hierbei eine in horizontaler x-Richtung und vertikaler y-Richtung verfahrbare Werkzeug-Spindel und einen Werkstück-Schlitten auf, der in z-Richtung verfahrbar ausgebildet ist. Die Beschickungs- und Entnahme-Vorrichtung weist eine H-förmige Paletten-Wechsel-Einrichtung auf, die um eine vertikale yl-Achse schwenk-antreibbar ist. Der Arbeitsablauf ist hierbei derart, dass auf einem Paar der Arme der Paletten-Wechsel-Einrichtung eine abnehmbare Palette angeordnet ist, auf die eine Bedienungsperson ein zu bearbeitendes Werkstück aufsetzt. Von dem anderen, diametral gegenüberliegenden Paar von Armen ist eine Palette mit einem Werkstück auf dem Werkstück-Schlitten abgesetzt worden und wird bearbeitet. Nach der Bearbeitung wird die Palette mit dem bearbeiteten Werkstück von dem Paar von Armen der Paletten-Wechsel-Einrichtung vom Werkstück-Schlitten abgehoben. Die Paletten-Wechsel-Einrichtung wird um 180° geschwenkt, so dass das erwähnte noch unbearbeitete Werkstück in den Bereich des Werkstück-Schlittens gelangt. Die Palette mit dem zu bearbeitenden Werkstück wird auf dem Werkstück-Schlitten abgesetzt. Das bearbeitete Werkstück befindet sich vor der Maschine. Der Bediener nimmt es von der Palette ab und setzt ein neues zu bearbeitendes Werkstück auf die Palette auf. Dann wiederholt sich der erwähnte Zyklus.

Wenn bei dieser bekannten Kombination von Werkzeug-Maschine und Beschickungs- und Entnahme-Vorrichtung eine weitere Achse, nämlich ein um eine A-Achse verschwenkbarer Wiege-Tisch, auf dem Werkstück-Schlitten vorgesehen werden soll, dann führt dies dazu, dass das Werkstück selber in der Werkzeug-Maschine höher angeordnet ist. Dies macht die geschilderte Beschickung schwierig. Wenn die Beschickung der Maschine mit einem Roboter erfolgt, dann wäre dies unproblematisch. Wenn aber das Aufsetzen eines zu bearbeitenden Werkstücks auf die entsprechende Palette von Hand durchgerührt werden soll, oder aber wenn die Maschine in eine Transfer-Straße eingebaut ist, in der die Werkstücke auf dem niedrigeren - oben geschilderten - Niveau transportiert werden, dann führt die Anordnung des Wiege-Tisches zu Handhabungsproblemen bei der Beschickung und Entnahme von Werkstücken.

Aus der EP 1 747 843 A1 ist eine Werkzeugmaschine mit einem Werkstückwechsler, also einer Beschickungs- und Entnahme-Vorrichtung bekannt, die unterhalb einer in horizontaler x-Richtung und vertikaler z-Richtung verfahrbaren Spindel zur Aufnahme einer Werkstück-Palette ausgebildeten Wiegetisch aufweist.

Der Erfindung liegt daher die Aufgabe zugrunde, die Kombination von Werkzeug-Maschine und Beschickungs- und Entnahme-Vorrichtung nach dem Oberbegriff des Anspruchs 1 in einfacher Weise so auszugestalten, dass auch bei Vorsehen eines Wiege-Tisches auf dem Werkstück-Schlitten in einfacher Weise eine Beschickung mit und Entnahme von Werkstücken möglich ist.

Diese Aufgabe wird erfindungsgemäß mit den Merkmalen im Kennzeichnungsteil des Anspruches 1 gelöst. Durch die erfindungsgemäßen Maß nahmen wird erreicht, dass durch eine einfache zusätzliche Hub-Bewegung das zu bearbeitende Werkstück von einer unteren Beschickungs- und Entnahme-Position in eine mittlere Werkstück-Absetz-Position angehoben werden kann, in der die Paletten-Wechsel-Einrichtung relativ zum Werkstück-Schlitten in diesen hineinverfahren werden kann.

Ohne besondere zusätzliche Maßnahmen wird der Platzbedarf für die Paletten-Wechsel-Einrichtung und den Werkstück-Schlitten in z-Richtung reduziert, weil während der Bearbeitung des Werkstücks die Paletten-Wechsel-Einrichtung sich teilweise im Werkstück-Schlitten befinden kann.

Weitere vorteilhafte Ausgestaltungen ergeben sich aus den weiteren Unteransprüchen.

Weitere Vorteile, Merkmale und Einzelheiten der Erfindung ergeben sich aus der Beschreibung eines Ausführungsbeispiels anhand der Zeichnung. Es zeigt
- Fig. 1: die Kombination einer Werkzeug-Maschine mit Beschickungs- und Entnahme-Vorrichtung in einer Bearbeitungs-Stellung in Seiten-Längs-Ansicht,
- Fig. 2: die Kombination nach Fig. 1 in einer Draufsicht,
- Fig. 3: die Kombination nach Fig. 1 in einer Position zur Vorbereitung für einen Paletten-Wechsel,
- Fig. 4: die Kombination nach Fig. 1 während eines Paletten-Wechsels,
- Fig. 5: eine Teil-Stirn-Ansicht der Kombination nach Fig. 4 in einer Darstellung entsprechend dem Sichtpfeil V in Fig. 4,
- Fig. 6: die Kombination nach Fig. 1 während eines Palettenwechsels und
- Fig. 7: die Kombination nach Fig. 1 am Ende eines Paletten-Wechsels.

Die in der Zeichnung dargestellte Werkzeug-Maschine 1 weist ein Maschinenbett 2 auf, auf dem in einer horizontalen x-Richtung ein als x-Schlitten dienender Ständer 3 auf x-Führungs-Schienen 4 mittels eines x-Antriebsmotors 5 verschiebbar geführt ist. Auf der einem Arbeitsraum 6 zugewandten Vorderseite des Ständers 3 ist ein y-Schlitten 7 in einer vertikalen y-Richtung mittels eines y-Antriebsmotors 8 verschiebbar geführt. Am y-Schlitten 7 wiederum ist eine drehantreibbare Werkzeug-Spindel 9 gelagert, die sich in horizontaler z-Richtung zum Arbeitsraum 6 hin erstreckt. Die Werkzeug-Spindel 9 kann ein Werkzeug 10 zum Bearbeiten eines Werkstücks 11 bzw. 11' aufnehmen. Die z-Richtung steht senkrecht auf der durch die x-Richtung und die y-Richtung aufgespannten Ebene. Auf dem Maschinenbett 2 ist ein Werkstück-Schlitten 12 auf z-Führungs-schienen 13 mittels eines z-Antriebsmotors 14 verschiebbar geführt. Soweit die Werkzeug-Maschine 1 bis hierher beschrieben ist, ist sie allgemein bekannt und in der Praxis üblich.

Auf dem Werkstück-Schlitten 12 ist ein sogenannter Wiege-Tisch 15 zwischen Seitenwangen 16 des Werkstück-Schlittens 12 um eine zur x-Richtung parallele A-Achse 17 schwenkbar gelagert. Der Schwenk-Antrieb erfolgt mittels eines A-Schwenk-Antriebs 18.

Der Ständer 3 begrenzt den Arbeitsraum 6 nach hinten. Auf der vorderen Seite der Werkzeug-Maschine 1, die dem Ständer 3 abgewandt ist, ist eine Beschickungs- und Entnahme-Vorrichtung 19 vorgesehen, bei der es sich um einen sogenannten Paletten-Wechsler handelt. Sie weist ein GrundGestell 20 auf, auf dem eine H-förmige Paletten-Wechsel-Einrichtung 21 1 um eine vertikale, zur y-Achse parallele yl-Achse 22 verschwenkbar angeordnet ist. Die Verschwenkbewegungen erfolgen mittels eines yl-Schwenk-Antriebs 23. Außerdem ist die Paletten-Wechsel-Einrichtung 21 in Richtung der yl-Achse 22 mittels eines Hub-Antriebs 24 verstellbar, und zwar zwischen drei Positionen, nämlich einer unteren Beschickungs- und Entnahme-Position 25, einer mittleren angehobenen Paletten-Absetz-Position 26 und einer oberen Paletten-Aushebe-Position 27.

Die H-förmige Paletten-Wechsel-Einrichtung 21 weist zwei einander diametral gegenüberliegende, spiegelsymmetrisch zur yl-Achse 22 angeordnete Paare von Armen 28, 28' auf, an denen jeweils vier Auflagen 29 ausgebildet sind, die jeweils eine Zentrier-Bohrung 30 aufweisen. Auf diesen Auflagen 29 jedes Paares von Armen 28, 28' kann eine Palette 31 bzw. 31' abgesetzt werden, die an ihrer Unterseite den Zentrier-Bohrungen 30 in der Anordnung entsprechende Zentrier-Stifte 32 aufweist, die bei der Ablage einer Palette 31 bzw. 31' auf den Auflagen 29 in die Zentrier-Bohrungen 30 eingreifen, wodurch die jeweilige Palette 31 bzw. 31' auf der Paletten-Wechsel-Einrichtung 21 genau positioniert angeordnet und gegen Verrutschen gesichert wird.

An der Unterseite jeder Palette 31 bzw. 31' sind Aufnahmen 33 angebracht, die beim Absetzen der Palette 31, 31' auf den Wiege-Tisch 15 auf kegelförmige Spann-Einrichtungen 34 aufgesetzt werden, mittels derer die Palette 31 bzw. 31' gegenüber dem Wiege-Tisch 15 exakt ausgerichtet und fest gespannt wird.

Bei Bedarf können die Spann-Einrichtungen 34 auf dem Wiege-Tisch 15 auf einer in den Wiege-Tisch 15 integrierten, lediglich angedeuteten Schwenk-Einrichtung 35 angeordnet sein, die mittels eines B-Schwenk-Antriebs 36 um eine vertikale, zur y-Richtung parallele B-Achse 37 schwenkbar ist. Unmittelbar unterhalb des Wiege-Tisches 15 ist ein Freiraum 38 ausgebildet, der so hoch ist, dass er die Arme 28 bzw. 28' aufnehmen kann, ohne dass eine Kollision zwischen dem Wiege-Tisch 15 und den Armen 28, 28' eintritt.

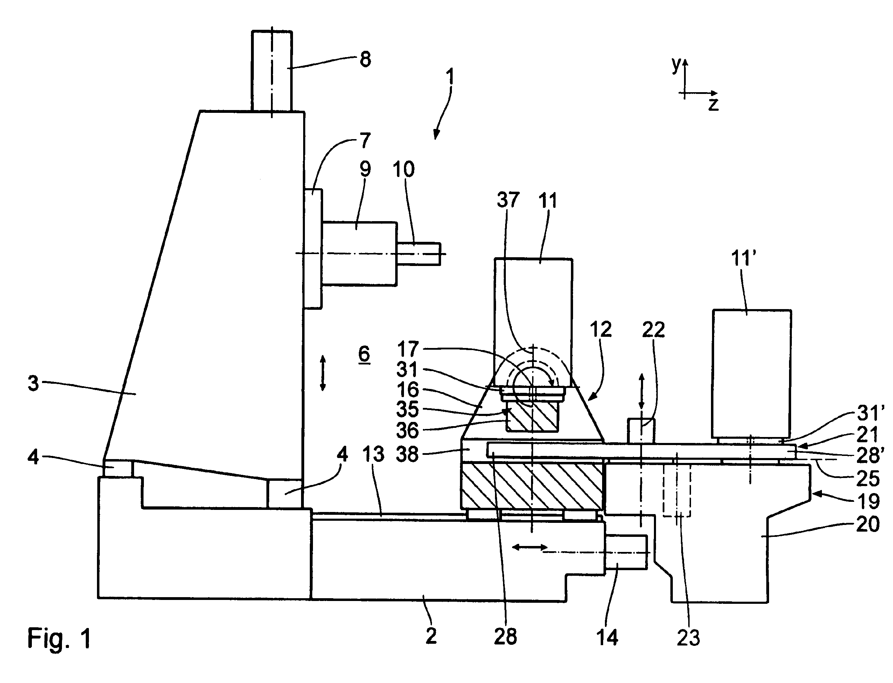

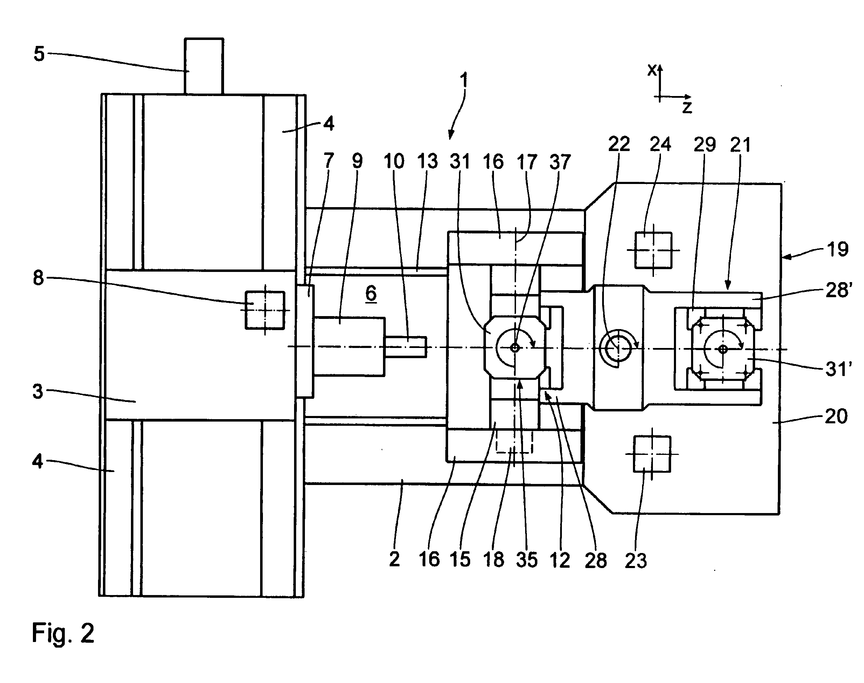

Die Arbeitsweise ist wie folgt:
Ausgegangen wird von einer in den Fig. 1 und 2 dargestellten Bearbeitungssituation, in der sich eine Palette 31 mit einem Werkstück 11 auf dem Wiege-Tisch 15 befindet und mittels des Werkzeugs 10 bearbeitet wird, wobei das um die z-Achse drehangetriebene Werkzeug 10 in der üblichen Weise in der x- und y-Richtung verfahren werden kann. Demgegenüber wird das Werkstück 11 in z-Richtung verfahren und um die A-Achse 17 und gegebenenfalls um die B-Achse 37 während der Bearbeitung geschwenkt. Wie die Fig. 1 und 2 erkennen lassen, befindet sich hierbei das eine Paar von Armen 28, mittels dessen die Palette 31 mit dem Werkstück 11 dem Wiege-Tisch 15 zugeführt worden ist, unter dem Wiege-Tisch 15 in der unteren Beschickungs- und Entnahme-Position 25, so dass der Wiege-Tisch 15 und damit auch der Werkzeug-Schlitten 12 frei von den zugeordneten Armen 28 der Paletten-Wechsel-Einrichtung 21 sind. Das Paar von Armen 28 verbleibt also während der Bearbeitung des Werkstücks 11 zumindest teilweise im Werkstück-Schlitten 12.

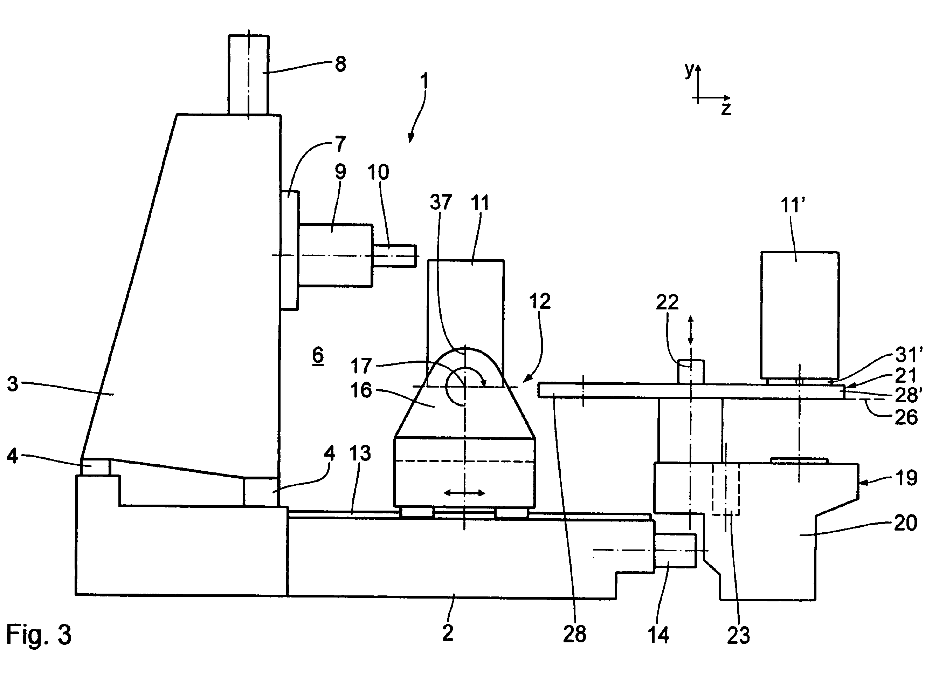

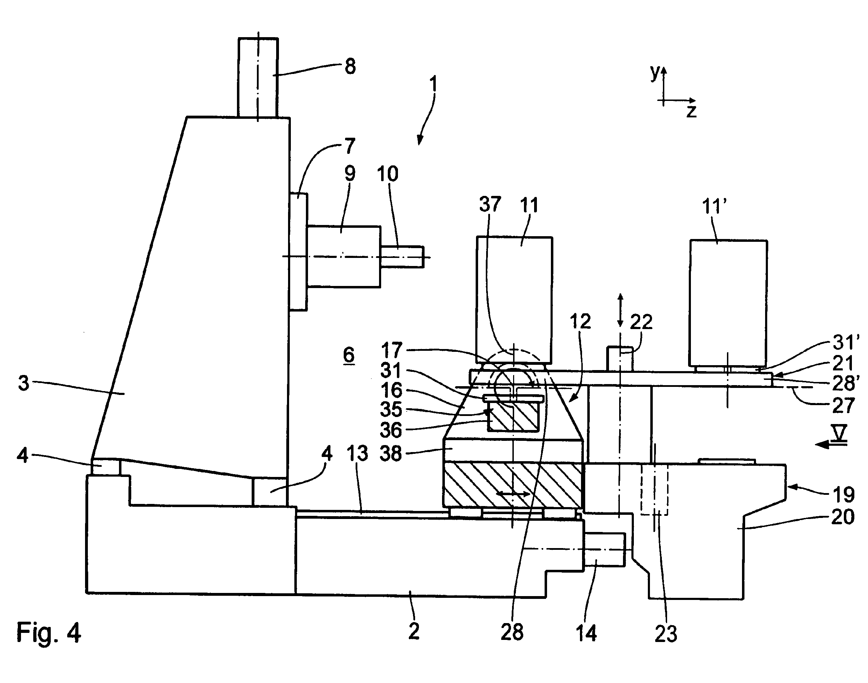

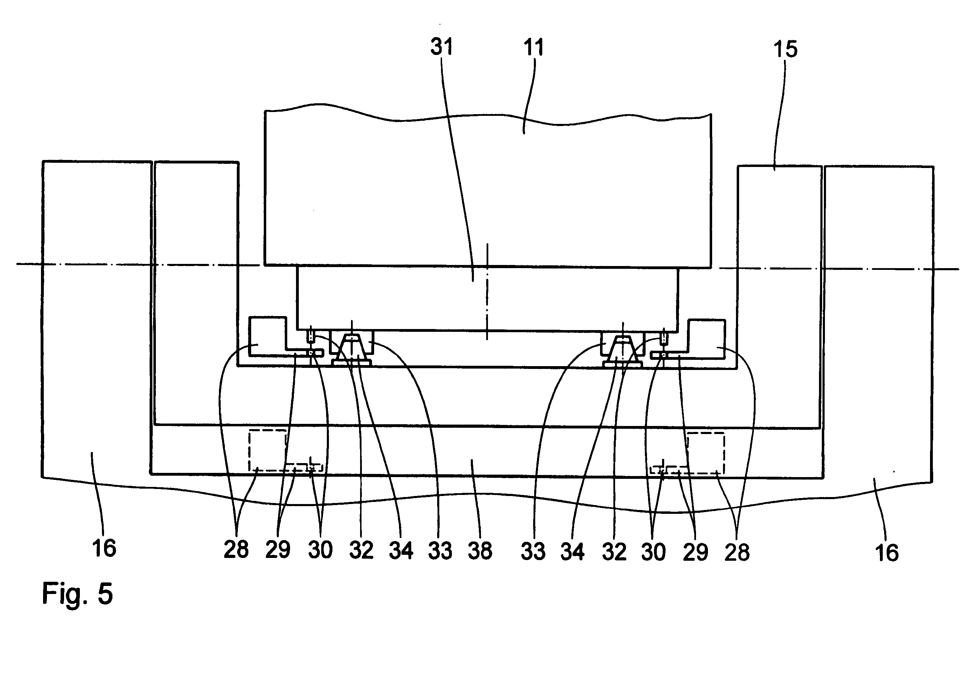

Nach Abschluss der Bearbeitung des Werkstücks 11 verfährt entsprechend Fig. 3 der Werkstück-Schlitten 12 so weit in Richtung zum Ständer 3, dass die Paletten-Wechsel-Einrichtung 21 außer Eingriff mit dem Werkstück-Schlitten 12 kommt. Selbstverständlich ist die Werkzeug-Spindel 9 mit dem Werkzeug 10 aus dem Kollisionsbereich mit dem bearbeiteten Werkstück 11 zu bringen. Im Anschluss daran wird die Paletten-Wechsel-Einrichtung 21 in die mittlere Paletten-Absetz-Position 26 hochgefahren, wie Fig. 3 entnehmbar ist. Danach wird - entsprechend der Darstellung in Fig. 4 - der Werkstück-Schlitten 12 wieder in z-Richtung zur Paletten-Wechsel-Einrichtung 21 hin verschoben, wodurch das Paar von Armen 28 entsprechend der Darstellung in Fig. 4 und 5 zwischen die Palette 31 mit dem Werkstück 11 und dem Wiege-Tisch 15 eingefahren wird. Im Abschluss daran wird die Paletten-Wechsel-Einrichtung 21 - immer noch entsprechend der Darstellung in Fig. 4 - in die obere Paletten-Aushebe-Position 27 verfahren und hebt die Palette 31 mit dem bearbeiteten Werkstück 11 von den Spann-Einrichtungen 34 ab, wobei gleichzeitig die Zentrier-Stifte 32 in die Zentrier-Bohrungen 30 der Auflagen 29 eingreifen.

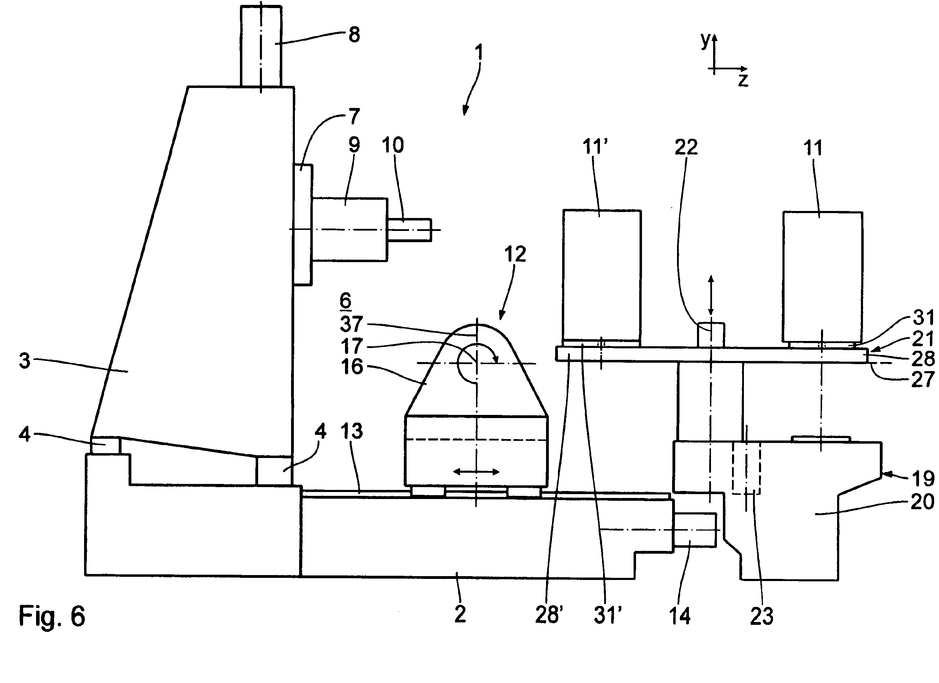

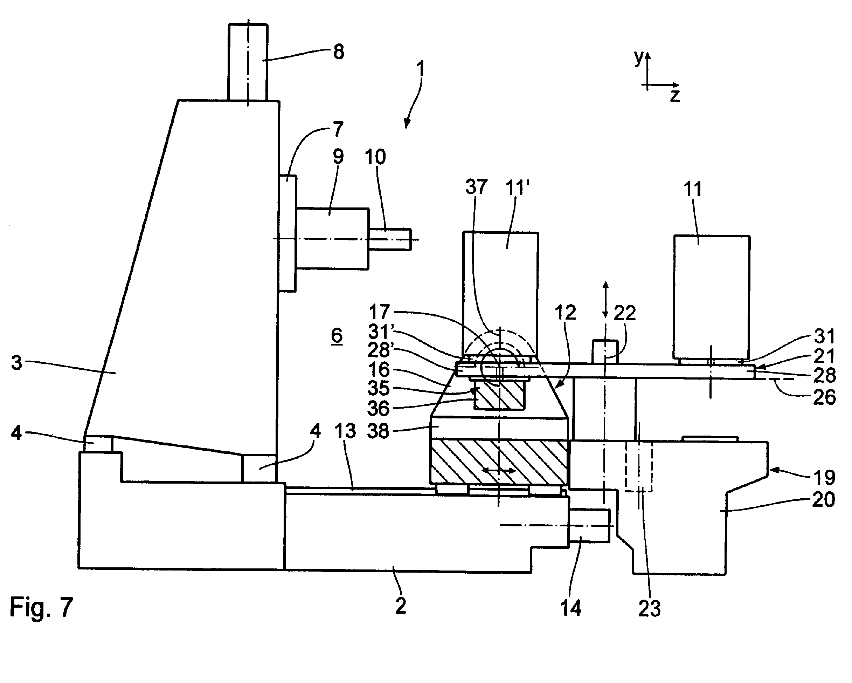

Danach wird entsprechend der Darstellung in Fig. 6 der Werkstück-Schlitten 12 aus dem Überdeckungsbereich mit der Paletten-Wechsel-Einrichtung 21 in Richtung zum Ständer 3 verfahren. Die Paletten-Wechsel-Einrichtung 21 wird mittels des yl-Schwenk-Antriebs 23 um 180° gedreht, so dass das Paar von Armen 28' mit der Palette 31' und dem unbearbeiteten Werkstück 11' in eine dem Werkstück-Schlitten 12 zugewandte Position gebracht wird. Danach wird der Werkstück-Schlitten 12 wieder in z-Richtung zur Beschickungs-Vorrichtung 19 hin verfahren, bis das Paar von Armen 28' mit der Palette 31' und dem zu bearbeitenden Werkstück 11' sich über dem Wiege-Tisch 15 befindet. Die Paletten-Wechsel-Einrichtung 21 wird gemäß Fig. 7 mittels des Hub-Antriebs 24 in die mittlere Paletten-Absetz-Position 26 heruntergefahren, wodurch die Palette 31' auf den Spann-Einrichtungen 34 abgesetzt wird. Gleichzeitig werden die Auflagen 29 so weit nach unten abgesenkt, dass die Zentrier-Stifte 32 der Palette 31' aus den Zentrier-Bohrungen 30 herausgezogen werden (s. hierzu Fig. 5). Der Werkstück-Schlitten 12 wird mit dem Werkstück 11' in Richtung zum Ständer 3 verfahren, bis das Paar von Armen 28' frei vom Werkstück-Schlitten 12 ist. Danach wird die Paletten-Wechsel-Einrichtung 21 in die untere Beschickungs- und Entnahme-Position 25 abgesenkt, wie es in den Fig. 1 und 2 dargestellt ist. Die Bearbeitung des Werkstücks 11' kann beginnen, wobei das Paar von Armen 28' in den Frei-Raum 38 unterhalb des Wiege-Tisches 15 eintauchen kann, wie es in Fig. 1 und 2 dargestellt ist. Gleichzeitig wird das bearbeitete Werkstück 11 von der Palette 31 abgenommen und ein neues zu bearbeitendes Werkstück aufgesetzt. Die beiden Paletten 31, 31' verbleiben auf der Werkzeug-Maschine 1 bzw. Beschickungs- und Entnahme-Vorrichtung 19. Es werden jeweils nur zu bearbeitende Werkstücke 11' aufgesetzt und bearbeitete Werkstücke 11 entnommen.

## Patentansprüche

1. Werkzeug-Maschine (1),
- mit einer in einer horizontalen x-Richtung und einer vertikalen y-Richtung verfahrbaren Werkzeug-Spindel (9),
- mit einem in einer zur x-Richtung und y-Richtung senkrechten horizontalen z-Richtung verfahrbaren Werkstück-Schlitten (12), und
- mit einer Beschickungs- und Entnahme-Vorrichtung (19), die
-- eine H-förmige, um eine zur vertikalen y-Richtung parallele yl-Achse (22) schwenkbare Paletten-Wechsel-Einrichtung (21),
-- einen yl-Schwenk-Antrieb (23) zur Verschwenkung der Paletten-Wechsel-Einrichtung (21) um die yl-Achse (22) und
-- einen Hub-Antrieb (24) zur Verschiebung der Paletten-Wechsel-Einrichtung (21) aus einer unteren Beschickungs- und Entnahme-Position (25), in eine mittlere Paletten-Absetz-Position (26) und in eine obere Paletten-Aushebe-Position (27) aufweist,
**gekennzeichnet durch**
- einen um eine horizontale, zur x-Achse parallele A-Achse schwenkbaren, zur Aufnahme einer Werkstück-Palette (31, 31') ausgebildeten Wiegetisch und
- einen unterhalb des Wiege-Tisches (15) am Werkstück-Schlitten (12) ausgebildeten Freiraum (38), der zur Aufnahme eines Teils der H-förmigen Paletten-Wechsel-Einrichtung (21) während der Verfahrbewegungen des Werkstück-Schlittens (12) in z-Richtung ausgebildet ist.

2. Werkzeug-Maschine nach Anspruch 1, **dadurch gekennzeichnet, dass** an der Unterseite jeder Palette (31, 31') und an Auflagen (29) der Paletten - Wechsel - Einrichtung (21) miteinander in Eingriff bringbare Zentrier-Stifte (32) und Zentrier-Bohrungen (30) ausgebildet sind.

3. Werkzeug-Maschine nach Anspruch 1 oder 2, **dadurch gekennzeichnet,**
**dass** auf dem Wiege-Tisch (15) Spann-Einrichtungen (34) ausgebildet sind, die mit angepassten Aufnahmen (33) an den Paletten (31, 31') in Eingriff bringbar sind.

## Claims

1. Machine tool (1),
- with a tool spindle (9) which is movable in a horizontal x-direction and a vertical y-direction,
- with a workpiece slide (12) which is movable in a horizontal z-direction which is perpendicular to the x-direction and y-direction, and
- with a feed and removal device (19),
-- which has an H-shaped pallet changing mechanism (21) which is pivotable about a yl-axis (22) which is parallel to the vertical y-direction,
-- which has a yl-pivot drive (23) for pivoting the pallet changing mechanism (21) about the yl-axis (22) and
-- which has a lift drive (24) for displacing the pallet changing mechanism (21) from a lower feed and removal position (25) into a central pallet depositing position (26) and into an upper pallet lifting out position (27)
**characterized by**
- a swiveling table which is pivotable about a horizontal A-axis which is parallel to the x-axis, and is designed to receive a workpiece pallet (31, 31') and
- a free space (38) which is formed below the swiveling table (15) on the workpiece slide (12) and is formed to receive a part of the H-shaped pallet changing mechanism (21)during the displacement of the workpiece slide (12) in the z-direction.

2. Machine tool according to claim 1, **characterized in that** centering pins (32) and centering bores (30) which are engageable with one another are formed on the lower side of each pallet (31, 31') and the supports (29) of the pallet changing mechanism (21).

3. Machine tool according to claim 1 or 2, **characterized in that** clamping mechanisms (34), which are engageable with adapted receivers (33) on the pallets (31, 31'), are formed on the swiveling table (15).

## Revendications

1. Machine outil (1),
- comprenant une broche à outils (9) pouvant être déplacée dans une direction horizontale x et dans une direction verticale y,
- comprenant un chariot de pièces à usiner (12) pouvant être déplacé dans une direction z horizontale perpendiculaire à la direction x et à la direction y,
et
- comprenant un dispositif de chargement et de déchargement (19) qui présente
-- un dispositif de changement de palettes (21), en forme de H, pouvant pivoter autour d'un axe y1 (22) parallèle à la direction verticale y,
-- un entraînement de pivotement y1 (23) pour le pivotement du dispositif de changement de palettes (21) autour de l'axe y1 (22),
-- un entraînement de levage (24) pour le déplacement du dispositif de changement de palettes (21) d'une position de chargement et de déchargement inférieure (25) vers une position de dépôt de palettes moyenne (26) et vers une position de prélèvement de palettes supérieure (27),
**caractérisée par**
- une table de pesée, aménagée pour la réception d'une palette de pièces à usiner (31, 31') pouvant pivoter autour d'une axe A horizontal, parallèle à l'axe x, et
- un espace libre (38) formé en dessous de la table de pesée (15) sur le chariot de pièces à usiner (12), qui est aménagé pour la réception d'une partie du dispositif de changement de palettes (21) en forme de H pendant les mouvements de déplacement du chariot de pièces à usiner (12) dans la direction z.

2. Machine outil selon la revendication 1 **caractérisée en ce que** des tiges de centrage (32), pouvant être encliquetées les unes avec les autres, et des alésages de centrage (30) sont formés sur la face inférieure de chaque palettes (31, 31') et sur les appuis (29) du dispositif de changement de palettes (21).

3. Machine outil selon les revendications 1 ou 2 **caractérisée en ce**
**que** des dispositifs de serrage (34) sont formés sur la table de pesée (15), qui peuvent être encliquetés avec des prises adaptées (33) sur les palettes (31, 31').
